# EUROPÄISCHE PATENTSCHRIFT

(11) **EP 1 975 462 B1**
(45) Veröffentlichungstag und Bekanntmachung des Hinweises auf die Patenterteilung: **02.01.2013**
(21) Anmeldenummer: 08005703.7
(22) Anmeldetag: 26.03.2008
(51) Int. Cl.: F16H 19/06

(54) **Lineareinheit**
Linear unit
Unité linéaire

(30) Priorität: 30.03.2007 DE 202007004693 U
(43) Veröffentlichungstag der Anmeldung: 01.10.2008
(73) Patentinhaber: Robert Bosch GmbH, 70469 Stuttgart (DE)
(72) Erfinder: Keller, Bernhard, 97535 Wasserlosen-Kaisten (DE); Hoherz, Roland, 97490 Kützberg (DE); Anhut, Sven, 97422 Schweinfurt (DE)
(74) Vertreter: Maiß, Harald

(56) Entgegenhaltungen:
- EP-A2- 0 918 174
- DE-A1- 4 020 148
- DE-C1- 3 743 577
- FR-A1- 2 684 034
- US-A- 3 832 910
- US-A- 5 125 281
- US-A- 5 186 545

## Beschreibung

Die Erfindung betrifft eine Lineareinheit mit einem mittels eines Antriebsriemens längs eines Stators bewegbarer Läufer, wobei der Antriebsriemen um eine mit einer Antriebseinheit verbundene Antriebsrolle und eine freilaufende Rolle herumgeführt ist, wobei die freilaufende Rolle einem der Längsenden des Stators benachbart an dem Stator gelagert ist, und wobei der Antriebsriemen mit dem Läufer an wenigstens einer Befestigungsstelle verbunden ist, wobei die Achse bzw. Welle der freilaufenden Rolle in einem Schlitten gelagert ist, dessen Lage relativ zum Stator in dessen Längsrichtung verstellbar ist, wobei der Schlitten an dem Stator geführt ist.

Eine derartige Lineareinheit ist aus der EP 918 174 A2 bekannt. Der Schlitten dieser Lineareinheit ist in einem vergleichsweise großen Hohlraum des Stators aufgenommen, der relativ genau an den Schlitten angepasst werden muss, um eine leichtgängige und nahezu spielfreie Führung des Schlittens zu bewirken. Die erforderliche Genauigkeit lässt sich bei der Herstellung des Hohlraums allein im kostengünstigen Aluminiumstrangpressverfahren nicht erreichen. Es ist vielmehr eine teuere Span abhebende Bearbeitung des genannten Hohlraums erforderlich.

Aus der US 5 125 281 A ist eine weitere Lineareinheit mit einem Stator, einem Läufer, einem Antriebsriemen, einer freilaufenden Rolle und einer Antriebsrolle bekannt. Die Führung für die bewegliche freilaufende Rolle ist für die teuere Span abhebende Herstellung ausgelegt.

Aus der DE 37 43 577 C1 ist eine weitere Lineareinheit bekannt.

Die Aufgabe der Erfindung besteht darin, eine kostengünstige Lineareinheit bereitzustellen. Gemäß dem selbständigen Anspruch wird diese Aufgabe dadurch gelöst, dass eines der Teile, Stator oder Schlitten, eine hinterschnittene Nut aufweist, die einen zugehörigen T-förmigen Vorsprung des jeweils anderen Teils, Schlitten oder Stator, umgreift.

Der Abstand zwischen demjenigen Ende des Läufers, welches dem der freilaufenden Rolle zugeordneten Ende des Stators zugewandt ist, und der diesem Ende des Läufers nächstgelegenen Befestigungsstelle wenigstens gleich dem Radius der freilaufenden Rolle ist. Da sich der Läufer in Richtung auf die freilaufende Rolle zu maximal soweit bewegen kann, bis sich die der freilaufenden Rolle nächstgelegene Befestigungsstelle genau am Scheitelpunkt der freilaufenden Rolle befindet, das heißt an dem Punkt, an dem der Antriebsriemen mit der freilaufenden Rolle in Kontakt tritt und seine Umlenkbewegung um die freilaufende Rolle herum beginnt, und in dieser Stellung erfindungsgemäß noch ein Abschnitt des Läufers über den Scheitelpunkt hinaus ragt, dessen Länge wenigstens gleich dem Radius der freilaufenden Rolle ist, kann der Läufer eine erheblich größere Länge des Stators für seine Bewegung nutzen.

Um eine noch größere Länge des Stators für die Bewegung des Läufers nutzen zu können, wird in Weiterbildung der Erfindung vorgeschlagen, dass der Abstand wenigstens gleich dem unter Berücksichtigung des um sie umlaufenden Antriebsriemens ermittelten Radius der freilaufenden Rolle ist.

In Abhängigkeit von der jeweiligen Konstruktion der Lineareinheit kann bei der Bestimmung des Abstands zusätzlich oder alternativ auch noch die Dicke einer Endplatte der Lineareinheit berücksichtigt werden.

Um die Lage der freilaufenden Rolle in Höhenrichtung der Lineareinheit stabilisieren und so einen ruhigeren Lauf des Antriebsriemen sicherstellen zu können, ist erfindungsgemäß, dass die Achse bzw. Welle der freilaufenden Rolle in einem Schlitten gelagert ist, dessen Lage relativ zum Stator in dessen Längsrichtung verstellbar ist, beispielsweise unter Verwendung wenigstens einer sich am Stator, vorzugsweise an einer Endplatte des Stators, abstützenden Spannschraube.

Der Schlitten ist an dem Stator geführt. Dabei weist eines der Teile, Stator oder Schlitten, eine hinterschnittene Nut auf, die zugehörige Vorsprünge des jeweils anderen Teils, Schlitten oder Stator, umgreift, so kann hierdurch eine sowohl in Höhenrichtung als auch in Querrichtung der Lineareinheit stabile Führung des Schlittens erzielt werden.

Da für einen ruhigen Lauf des Antriebsriemens insbesondere das in Höhenrichtung vorhandene Spiel verantwortlich ist, wird in Weiterbildung dieses Gesichtspunktes der Erfindung vorgeschlagen, dass Spieleinstellmittel vorgesehen sind, mittels derer das Spiel zwischen dem Schlitten und dem Stator einstellbar ist, vorzugsweise reduzierbar oder beseitigbar ist. Das Spiel in Höhenrichtung sollte dabei mittels der Spieleinstellmittel derart eingestellt sein, dass ein Spannen des Antriebsriemen, das heißt eine Verstellung des Schlittens in Längsrichtung des Stators, noch möglich ist, vorzugsweise gerade noch möglich ist. Nach dem Spannen des Riemens werden die Spieleinstellmittel fest angezogen, um ein Schwingen des Schlittens zu verhindern.

Der Schlitten kann in einem orthogonal zur Bewegungsrichtung genommenen Schnitt eine im Wesentlichen U-förmige Gestalt aufweisen. Dabei kann die Achse bzw. Welle der freilaufenden Rolle in den beiden Seitenschenkeln der U-Form gelagert sein oder/und die wenigstens eine Spannschraube in eine Stirnfläche wenigstens eines Seitenschenkels der U-Form eingreifen oder/und der Schlitten mittels des Basisschenkels der U-Form an dem Stator geführt sein oder/und die Spieleinstellmittel dem Basisschenkel der U-Form zugeordnet sein.

Um bei einer Bewegung des Läufers längs des Stators eine Geräuschentwicklung durch ein Schlagen des Antriebsriemens gegen den Läufer minimal halten zu können, wird in Weiterbildung der Erfindung vorgeschlagen, dass bei Vorsehen einer Mehrzahl von Befestigungsstellen diese in Bewegungsrichtung des Läufers unsymmetrisch über dessen Länge verteilt sind. Insbesondere ist es vorteilhaft, wenn der Abstand zwischen demjenigen Ende des Läufers, welches von der freilaufenden Rolle abgewandt ist, und der diesem Ende des Läufers nächstgelegenen Befestigungsstelle möglichst klein ist, vorzugsweise die diesem Ende des Läufers nächstgelegene Befestigungsstelle dem von der freilaufenden Rolle abgewandten Ende des Läufers benachbart angeordnet ist.

Wie dies an sich bekannt ist, kann auch erfindungsgemäß der Stator von dem, vorzugsweise auf Basis eines Strangpressprofils gefertigten, Gehäuse eines Linearmoduls gebildet sein.

Zudem kann der Antriebsriemen ein Zahnriemen sein, was ebenfalls an sich bekannt ist.

Die Erfindung wird im Folgenden an einem Ausführungsbeispiel anhand der beigefügten Zeichnungen näher erläutert werden. Es stellen dar:
- Figur 1: eine Perspektivansicht einer erfindungsgemäßen Lineareinheit;
- Figur 2: eine Stirnansicht der Lineareinheit gemäß Figur 1;
- Figur 3: eine Explosionsansicht der Spannvorrichtung der erfindungsgemäßen Lineareinheit; und
- Figur 4: eine schematische Seitenansicht der erfindungsgemäßen Lineareinheit.

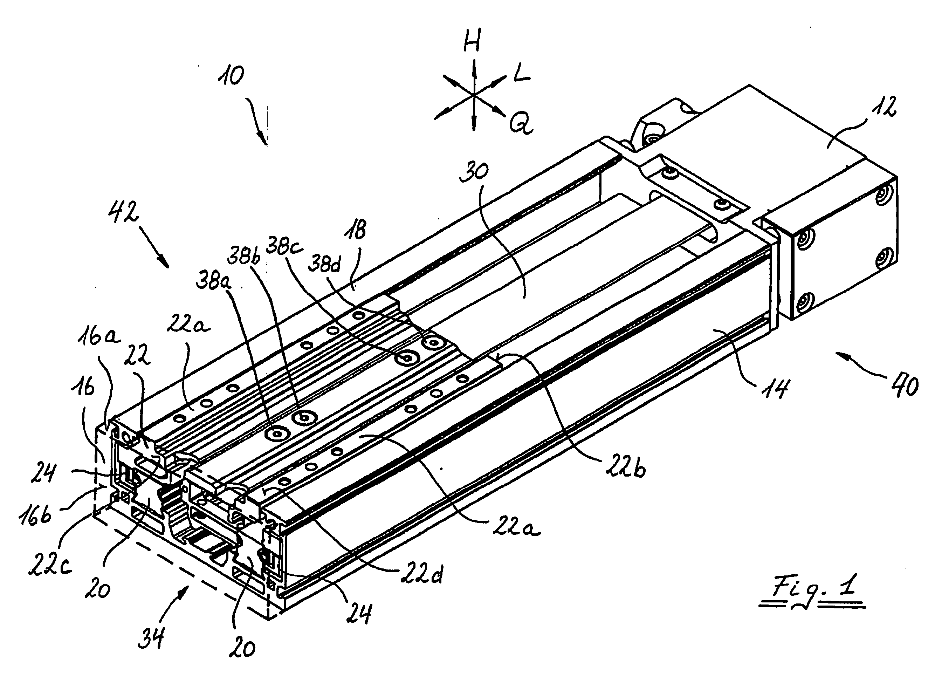

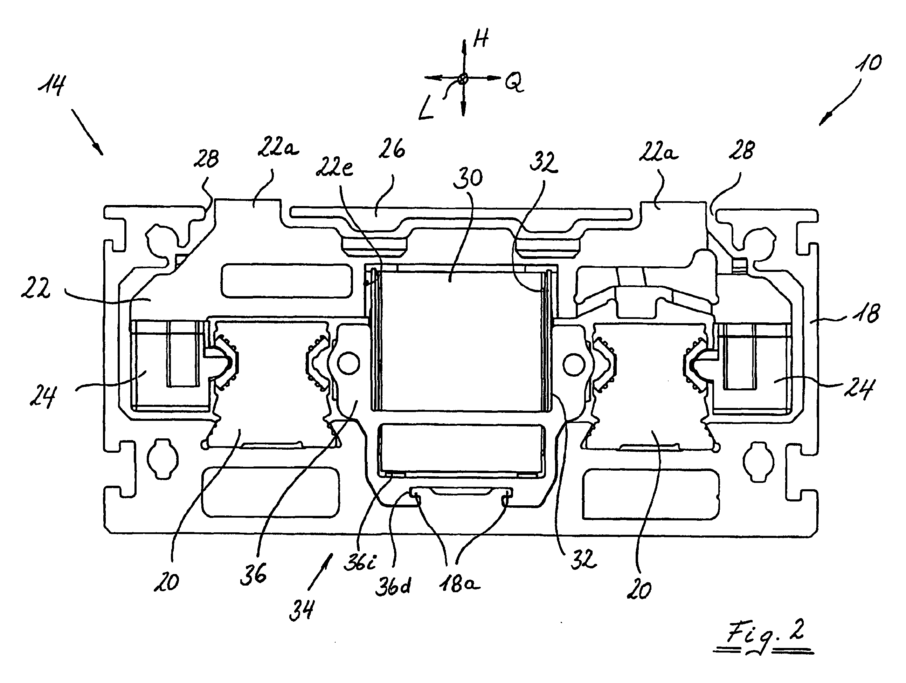

In Figur 1 ist eine erfindungsgemäße Lineareinheit ganz allgemein mit 10 bezeichnet. Sie umfasst eine Antriebseinheit 12 und eine Modulhaupteinheit 14, wobei in der Darstellung gemäß Figur 1 eine Endplatte 16 der Modulhaupteinheit 14 lediglich gestrichelt angedeutet ist, um einen Blick auf den inneren Aufbau der Modulhaupteinheit 14 zu gewähren. Ferner ist der innere Aufbau der Modulhaupteinheit 14 aus der Stirnansicht gemäß Figur 2 zu ersehen.

Die Modulhaupteinheit 14 umfasst ein Gehäuse 18, welches vorteilhafterweise aus einem Strangpressprofil mit im Wesentlichen U-förmigem Querschnitt gebildet ist. Am Basisschenkel der U-Form des Gehäuses 18 sind zwei Führungsschienen 20 befestigt, auf denen ein Tischteil 22 mittels Führungseinheiten 24 in Längsrichtung L der Lineareinheit 10 verschiebbar gelagert ist. Wie lediglich in Figur 2 dargestellt ist, ist die Öffnung zwischen den freien Enden der Seitenschenkel der U-Form des Gehäuses 18 über die gesamte Länge des Gehäuses 18 mittels eines Abdeckblechs 26 derart überdeckt, dass lediglich zwei Längsschlitze 28 verbleiben, durch welche zwei Befestigungsleisten 22a des Tischteils 22 ragen. An diesen Befestigungsleisten 22a kann ein mittels der Lineareinheit 10 zu verschiebendes Bauteil am Tischteil 22 befestigt werden. Das Abdeckblech 26 ist einenends an der Antriebseinheit 12 und andernends an der Endplatte 16 befestigt.

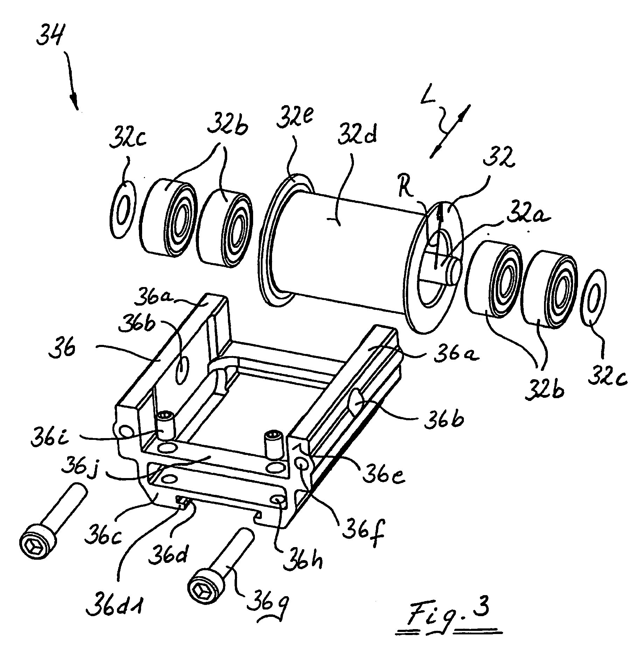

Wie insbesondere in Figur 1 zu erkennen ist, ist die erfindungsgemäße Lineareinheit 10 mit einem Riementrieb ausgestattet. Der zu einer endlosen Schleife geschlossene Antriebsriemen 30 des Riementriebs ist zum einen um eine angetriebene Rolle herumgeführt, welche in der Antriebseinheit 12 angeordnet und daher in der Zeichnung nicht zu sehen ist, und zum anderen um eine freilaufende Rolle 32, welche der Endplatte 16 benachbart angeordnet ist. Um den Antriebsriemen 30, der beispielsweise als Zahnriemen ausgebildet sein kann, spannen zu können, ist die freilaufende Rolle 32 in einer Spannvorrichtung 34 angeordnet, deren Aufbau und Funktion nachfolgend insbesondere mit Bezug auf Figur 3 näher erläutert werden wird:

Die Spannvorrichtung 34 umfasst einen Schlitten 36, der in der Stirnansicht gemäß Figur 2 einen im Wesentlichen U-förmigen Querschnitt aufweist. In den Seitenschenkeln 36a des Schlittens 36 sind Durchgänge 36b vorgesehen, welche zur Aufnahme der Achse bzw. Welle 32a der freilaufenden Rolle 32 dienen. Zur drehbaren Lagerung der freilaufenden Rolle 32 auf der Achse/Welle 32a sind Wälzlager 32b vorgesehen, welche mittels Passscheiben 32c auf der Achse/Welle 32a gehalten sind. An seinem Basisschenkel 36c ist der Schlitten 36 mit einer hinterschnittenen Nut 36d versehen, welche entsprechend ausgebildete Vorsprünge 18a des Basisschenkels 36c des Gehäuses 18 umgreift (siehe Figur 2). In die Stirnflächen 36e der Seitenschenkel 36a des Schlittens 36 sind in Längsrichtung L verlaufende Gewindebohrungen 36f eingebracht. In diese Gewindebohrungen 36f greifen zwei Spannschrauben 36g ein, die die Endplatte 16 durchsetzten und sich an dieser mittels ihrer Köpfe abstützen. Auf diese Weise kann durch das Anziehen der Spannschrauben 36g der Schlitten 36 auf die Endplatte 16 zu bewegt werden, wodurch der Antriebsriemen 30 gespannt werden kann.

Um ein zwischen dem Schlitten 36 und dem Gehäuse 18 bestehendes Spiel reduzieren beziehungsweise auf ein Maß einstellen zu können, welches eine gewünschte Verschiebbarkeit des Schlittens 36 in Längsrichtung L ermöglicht, sind im Basisschenkel 36c des Schlittens 36 beidseits der Nut 36d in Hochrichtung H verlaufende Gewindebohrungen 36h vorgesehen, welche den Basisschenkel 36c durchsetzen und in welche Madenschrauben 36i eingeschraubt werden können. Wenn sich die unteren Stirnflächen der Madenschrauben 36i auf dem Basisschenkel des Gehäuses 18 abstützen, werden die die Nut 36d begrenzenden Vorsprünge 36d1 gegen die Vorsprünge 18a gedrückt, wodurch ein zwischen dem Schlitten 36 und dem Gehäuse 18 etwaig vorhandenes Spiel verringert oder beseitigt wird.

Nachzutragen ist noch, dass zur Stabilisierung der Gestalt des Schlittens 36 Verstärkungsstege 36j vorgesehen sind, welche zu dessen Basisschenkel 36c parallel verlaufen.

Nachzutragen ist ferner, dass dann, wenn die Breite des Basisschenkels 36c im Wesentlichen dem Breitenmaß der Rolle 32 entspricht, eine besonders kompakte Bauform erreicht werden kann.

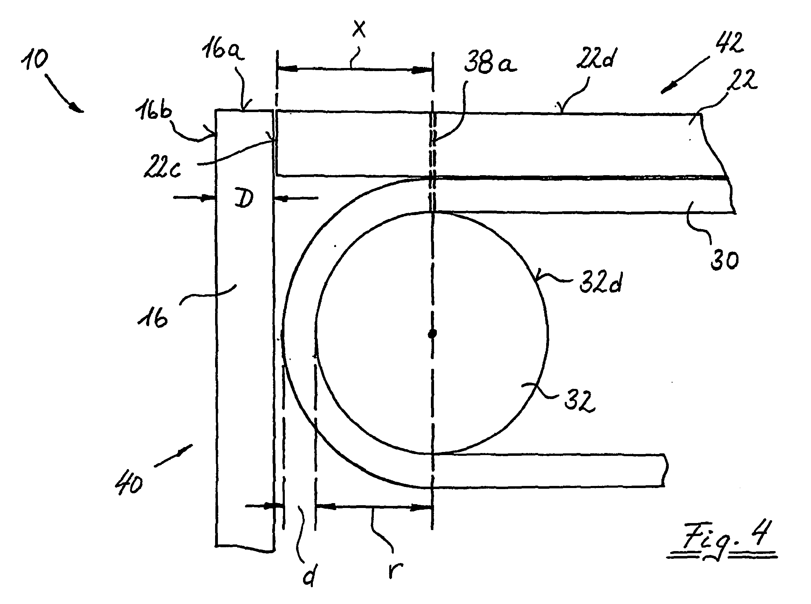

Wie in Figur 1 dargestellt ist, ist der Antriebsriemen 30 an dem Tischteil 22 an vier Befestigungsstellen 38a, 38b, 38c und 38d befestigt. Wie man ohne Weiteres erkennt, sind diese Befestigungsstellen in Längsrichtung L des Tischteils 22 ungleichmäßig verteilt. Und zwar sind die Befestigungsstellen 38c und 38d näher an dem von der freilaufenden Rolle 32 abgewandten Ende 22b des Tischteils 22 angeordnet als die Befestigungsstellen 38a und 38b an dem der freilaufenden Rolle 32 zugewandten Ende 22c des Tischteils 22. Für die vorliegende Erfindung von Bedeutung ist dabei die Tatsache, dass, wie insbesondere in Figur 4 dargestellt ist, die Befestigungsstelle 38a, die die dem Ende 22c des Tischteils 22 nächstgelegene Befestigungsstelle ist, von diesem Ende 22c einen Abstand x aufweist, der größer ist als der Radius r der freilaufenden Rolle 32, vorzugsweise sogar größer ist als die Summe des Radius r und der Dicke d des Antriebsriemens 30.

Bei Einsatz einer freilaufenden Rolle 32, wie sie in Figur 3 dargestellt ist, d.h. einer Rolle, deren zylindrische Umlenkfläche 32d seitlich von zwei Begrenzungsscheiben beziehungsweise Begrenzungsringen 32e begrenzt ist, ist es dann, wenn der Radius R der Begrenzungsscheiben/Begrenzungsringe 32e größer ist als die Summe des Radius r der zylindrischen Umlenkfläche 32d und der Dicke d des Antriebsriemens 30, bevorzugt, dass der Abstand x größer ist als dieser Radius R.

Wenn die Modulhaupteinheit 14 derart ausgebildet ist, dass die Oberseite 22d des Tischteils 22 nicht bündig mit der Oberseite 16a der Endplatte 16 abschließt, sondern über diese hinausragt, so dass das Tischteil 22 bis über die Endplatte 16 verfahren werden kann, so kann der Abstand x sogar noch größer gewählt werden, beispielsweise um die Dicke D der Endplatte 16, so dass das Ende 22c des Tischteils 22 mit der Stirnfläche 16b der Endplatte 16 im Wesentlichen bündig abschließt.

Auf diese Weise kann die gesamte Länge der Modulhaupteinheit 14 zum Verschieben des Tischteils 22 genutzt werden.

Nachzutragen ist noch, dass in dem Ende 22c des Tischteils 22 eine Ausnehmung 22e vorgesehen ist, welche sich von diesem Ende 22c aus in das Tischteil 22 hineinerstreckt. In der in Figur 1 dargestellten Stellung der Lineareinheit 10 ist die freilaufende Rolle 32 zumindest teilweise in dieser Ausnehmung 22e aufgenommen. Hierdurch kann sichergestellt werden, dass das Gehäuse 18 der Modulhaupteinheit 14 trotz der Realisierung der vorliegenden Erfindung eine geringe Bauhöhe aufweist, d.h. in Höhenrichtung H eine geringe Abmessung aufweist.

Nachzutragen ist ferner, dass zumindest die Antriebseinheit 12, das Gehäuse 18, die Endplatte 16 und die Führungsschienen 20 den Stator 40 der Lineareinheit 10 bilden und dass zumindest das Tischteil 22 und die Führungseinheiten 24 den Läufer 42 der Lineareinheit 10 bilden.

## Patentansprüche

1. Lineareinheit (10) mit einem mittels eines Antriebsriemens (30) längs eines Stators (40) bewegbaren Läufer (42), wobei der Antriebsriemen (30) um eine mit einer Antriebseinheit (12) verbundene Antriebsrolle und eine freilaufende Rolle (32) herumgeführt ist, wobei die freilaufende Rolle (32) einem der Längsenden (16) des Stators (40) benachbart an dem Stator (40) gelagert ist, und wobei der Antriebsriemen (30) mit dem Läufer (42) an wenigstens einer Befestigungsstelle (38a - 38d) verbunden ist,
wobei die Achse bzw. Welle (32a) der freilaufenden Rolle (32) in einem Schlitten (36) gelagert ist, dessen Lage relativ zum Stator (40) in dessen Längsrichtung (L) verstellbar ist, beispielsweise unter Verwendung wenigstens einer sich am Stator (40), vorzugsweise einer Endplatte (16) des Stators (40), abstützenden Spannschraube (36g),
wobei der Schlitten (36) an dem Stator (40) geführt ist,
**dadurch gekennzeichnet, dass** eines (36) der Teile, Stator oder Schlitten, eine hinterschnittene Nut (36d) aufweist, die einen zugehörigen T-förmigen Vorsprung (18a) des jeweils anderen Teils (40), Schlitten oder Stator, umgreift.

2. Lineareinheit nach Anspruch 1,
**dadurch gekennzeichnet, dass** im Basisschenkel (36c) des Teils (36; 40) mit der hinterschnittenen Nut beiderseits der hinterschnittenen Nut (36d) in eine Hochrichtung (H) verlaufende Gewindebohrungen (36h) vorgesehen sind, welche den Basisschenkel (36c) durchsetzen und in welche Madenschrauben (36i) eingeschraubt werden können, so dass sich deren untere Stirnflächen auf dem Basisschenkel des anderen Teils (40; 36) abstützen, wodurch die hinterschnittene (36d) Nut gegen den T-förmigen Vorsprung (18a) gedrückt wird.

3. Lineareinheit nach einem der vorstehenden Ansprüche,
**dadurch gekennzeichnet, dass** der Abstand (x) zwischen demjenigen Ende (22c) des Läufers (42), welches dem der freilaufenden Rolle (32) zugeordneten Ende (16) des Stators (40) zugewandt ist, und der diesem Ende (22c) des Läufers (42) nächstgelegenen Befestigungsstelle (38a) wenigstens gleich dem Radius (r) der freilaufenden Rolle (32) ist.

4. Lineareinheit nach einem der vorstehenden Ansprüche,
**dadurch gekennzeichnet, dass** die Lage der freilaufenden Rolle (32) relativ zum Stator (40) verstellbar ist.

5. Lineareinheit nach einem der vorstehenden Ansprüche,
**dadurch gekennzeichnet, dass** Spieleinstellmittel (36i) vorgesehen sind, mittels derer das Spiel zwischen dem Schlitten (36) und dem Stator (40) einstellbar ist.

6. Lineareinheit nach einem der vorstehenden Ansprüche,
**dadurch gekennzeichnet, dass** der Schlitten (36) in einem orthogonal zur Bewegungsrichtung (L) genommenen Schnitt eine im Wesentlichen U-förmige Gestalt aufweist.

7. Lineareinheit nach Anspruch 6,
**dadurch gekennzeichnet, dass** die Achse bzw. Welle (32a) der freilaufenden Rolle (32) in den beiden Seitenschenkeln (36a) der U-Form gelagert ist und die wenigstens eine Spannschraube (36g) in eine Stirnfläche (36e) wenigstens eines Seitenschenkels (36a) der U-Form eingreift und der Schlitten (36) mittels des Basisschenkels (36c) der U-Form an dem Stator (40) geführt ist und die Spieleinstellmittel (36i) dem Basisschenkel (36c) der U-Form zugeordnet sind.

8. Lineareinheit nach einem der vorstehenden Ansprüche,
**dadurch gekennzeichnet, dass** bei Vorsehen einer Mehrzahl von Befestigungsstellen (38a - 38d) diese in Bewegungsrichtung (L) des Läufers (42) ungleichmässig verteilt sind.

9. Lineareinheit nach einem der vorstehenden Ansprüche,
**dadurch gekennzeichnet, dass** der Stator (40) von dem, vorzugsweise auf Basis eines Strangpressteils gefertigten, Gehäuse (18) eines Linearmoduls (10) gebildet ist.

10. Lineareinheit nach einem der vorstehenden Ansprüche,
**dadurch gekennzeichnet, dass** der Antriebsriemen (30) ein Zahnriemen ist.

## Claims

1. Linear unit (10) having a rotor (42) that is movable along a stator (40) by means of a drive belt (30), wherein the drive belt (30) is guided around a drive roller, connected to a drive unit (12), and a free-running roller (32), wherein the free-running roller (32) is mounted on the stator (40) adjacently to one of the longitudinal ends (16) of the stator (40), and wherein the drive belt (30) is connected to the rotor (42) at at least one fastening point (38a-38d),
wherein the axle or shaft (32a) of the free-running roller (32) is mounted in a carriage (36), the position of which in relation to the stator (40) is adjustable in the longitudinal direction (L) thereof, for example using at least one tensioning screw (36g) that is supported on the stator (40), preferably on an end plate (16) of the stator (40),
wherein the carriage (36) is guided on the stator (40),
**characterized in that** one (36) of the parts, stator or carriage, has an undercut groove (36d) which engages around an associated T-shaped protrusion (18a) on the other part (40), carriage or stator, in each case.

2. Linear unit according to Claim 1,
**characterized in that**, in the base leg (36c) of the part (36; 40) having the undercut groove, there are provided, on both sides of the undercut groove (36d), threaded bores (36h) which extend in a vertical direction (H), pass through the base leg (36c) and into which grub screws (36i) can be screwed such that the lower end faces thereof are supported on the base leg of the other part (40; 36), as a result of which the undercut groove (36d) is pressed against the T-shaped protrusion (18a).

3. Linear unit according to either of the preceding claims,
**characterized in that** the distance (x) between that end (22c) of the rotor (42) which faces the end (16), assigned to the free-running roller (32), of the stator (40), and the fastening point (38a) closest to this end (22c) of the rotor (42) is at least the same as the radius (r) of the free-running roller (32).

4. Linear unit according to one of the preceding claims,
**characterized in that** the position of the free-running roller (32) in relation to the stator (40) is adjustable.

5. Linear unit according to one of the preceding claims,
**characterized in that** there are provided clearance setting means (36i), by means of which the clearance between the carriage (36) and the stator (40) is settable.

6. Linear unit according to one of the preceding claims,
**characterized in that** the carriage (36) has a substantially U-shaped form in a cross section taken orthogonally to the direction of movement (L).

7. Linear unit according to Claim 6,
**characterized in that** the axle or shaft (42a) of the free-running roller (32) is mounted in the two side legs (36a) of the U shape, and the at least one tensioning screw (36g) engages into an end face (36e) of at least one side leg (36a) of the U shape, and the carriage (36) is guided on the stator (40) by means of the base leg (36c) of the U shape, and the clearance setting means (36i) are assigned to the base leg (36c) of the U shape.

8. Linear unit according to one of the preceding claims,
**characterized in that** when a plurality of fastening points (38a-38d) are provided, these are distributed irregularly in the direction of movement (L) of the rotor (42).

9. Linear unit according to one of the preceding claims,
**characterized in that** the stator (40) is formed by the housing (18), produced preferably on the basis of an extrusion, of a linear module (10).

10. Linear unit according to one of the preceding claims,
**characterized in that** the drive belt (30) is a toothed belt.

## Revendications

1. Unité linéaire (10) comprenant un rotor (42) déplaçable au moyen d'une courroie d'entraînement (30) le long d'un stator (40), la courroie d'entraînement (30) étant guidée autour d'un rouleau d'entraînement connecté à une unité d'entraînement (12) et autour d'un rouleau en roue libre (32), le rouleau en roue libre (32) étant monté à l'une des extrémités longitudinales (16) du stator (40) en position adjacente au stator (40) et la courroie d'entraînement (30) étant connectée au rotor (42) au niveau d'au moins un point de fixation (38a-38d),
l'axe ou l'arbre (32a) du rouleau en roue libre (32) étant monté dans un chariot (36) dont la position par rapport au stator (40) peut être réglée dans sa direction longitudinale (L), par exemple en utilisant au moins une vis de serrage (36g) s'appuyant sur le stator (40), de préférence sur une plaque d'extrémité (16) du stator (40),
le chariot (36) étant guidé sur le stator (40), **caractérisée en ce que** l'une (36) des pièces, le stator ou le chariot, présente une rainure en contre-dépouille (36d), qui vient en prise autour d'une saillie associée en forme de T (18a) de l'autre partie respective (40), le chariot ou le stator.

2. Unité linéaire selon la revendication 1,
**caractérisée en ce que** dans la branche de base (36c) de la partie (36 ; 40) avec la rainure en contre-dépouille, de chaque côté de la rainure en contre-dépouille (36d), sont prévus des alésages filetés (36h) s'étendant dans la direction en hauteur (H), lesquels traversent la branche de base (36c) et dans lesquels peuvent être vissées des vis sans tête (36i), de telle sorte que leurs surfaces frontales inférieures s'appuient sur la branche de base de l'autre partie (40 ; 36), de telle sorte que la rainure en contre-dépouille (36d) soit pressée contre la saillie (18a) en forme de T.

3. Unité linéaire selon l'une quelconque des revendications précédentes,
**caractérisée en ce que** la distance (x) entre l'extrémité (22c) du rotor (42), qui est tournée vers l'extrémité (16) du stator (40) associée au rouleau en roue libre (32), et le point de fixation (38a) le plus proche de cette extrémité (22c) du rotor (42), est au moins égale au rayon (r) du rouleau en roue libre (32).

4. Unité linéaire selon l'une quelconque des revendications précédentes,
**caractérisée en ce que** la position du rouleau en roue libre (32) par rapport au stator (40) peut être réglée.

5. Unité linéaire selon l'une quelconque des revendications précédentes,
**caractérisée en ce que** des moyens d'ajustement du jeu (36i) sont prévus, au moyen desquels le jeu entre le chariot (36) et le stator (40) peut être ajusté.

6. Unité linéaire selon l'une quelconque des revendications précédentes,
**caractérisée en ce que** le chariot (36) présente, dans une coupe perpendiculaire à la direction de déplacement (L), une forme essentiellement en forme de U.

7. Unité linéaire selon la revendication 6,
**caractérisée en ce que** l'axe ou l'arbre (32a) du rouleau en roue libre (32) est monté dans les deux branches latérales (36a) de la forme en U et l'au moins une vis de serrage (36g) vient en prise dans une surface frontale (36e) d'au moins une branche latérale (36a) de la forme en U et le chariot (36) est guidé au moyen de la branche de base (36c) de la forme en U sur le stator (40) et les moyens d'ajustement du jeu (36i) sont associés à la branche de base (36c) de la forme en U.

8. Unité linéaire selon l'une quelconque des revendications précédentes,
**caractérisée en ce que** lorsque l'on prévoit une pluralité de points de fixation (38a - 38d), ceux-ci sont répartis de manière non uniforme dans la direction de déplacement (L) du rotor (42).

9. Unité linéaire selon l'une quelconque des revendications précédentes,
**caractérisée en ce que** le stator (40) est formé par le boîtier (18) d'un module linéaire (10), fabriqué de préférence à base d'une pièce filée.

10. Unité linéaire selon l'une quelconque des revendications précédentes,
**caractérisée en ce que** la courroie d'entraînement (30) est une courroie dentée.
